# EUROPEAN PATENT APPLICATION

(11) **EP 3 470 964 A1**
(43) Date of publication of application: **17.04.2019**
(21) Application number: 17196113.9
(22) Date of filing: 12.10.2017
(51) Int. Cl.: G06F 3/02, H01H 13/14, H01H 13/83, G06F 3/023, H01H 13/02

(54) **THREE-DIMENSIONAL CIRCUIT MEMBRANE, KEY FOR INPUT KEYBOARD COMPRISING IT AND METHOD OF MANUFACTURING THE SAME**

(71) Applicant: Getac Technology Corporation, Taipei City 11568 (TW)
(72) Inventor: Sheng, Yen-Long, 11568 Taipei City (TW)
(74) Representative: Schmidt, Axel

(57) **Abstract**

A three-dimensional circuit membrane 100 includes a thermoplastic plastic sheet 4 and a wiring 5. The thermoplastic plastic sheet 4 has a surface 41 and a thermoformed structure 43 outwardly protruding from the surface 41. The wiring 5 is printed on the surface 41 and extends to the thermoformed structure 43. The thermoformed structure 43 has a hollowed portion 8 beside the wiring 5 such that the thermoformed structure 43 collapses easily when pressed. A key 200 having the three-dimensional circuit membrane 100, a method for manufacturing the three-dimensional circuit membrane 100, and a method for manufacturing the key 200 are further provided.

## Description

### BACKGROUND OF THE INVENTION

### FIELD OF THE INVENTION

The present invention relates to three-dimensional circuit structures and, more particularly, to a three-dimensional circuit membrane, a key having the three-dimensional circuit membrane, and a method of manufacturing the three-dimensional circuit membrane.

### DESCRIPTION OF THE PRIOR ART

Technology, especially computer technology, is ever-evolving and so are peripheral products, such as keyboards, mice, and trackballs. As for the peripheral products, every user not only cherishes their ease of use, but also wants to enjoy seeing and touching them while using them.

Recently techniques of using electronic paper as a display unit of a single key on a keyboard were put forth. For example, US9360948 and Taiwan patent 1556137 put forth a keyboard system with changeable key displays. However, the conventional way to control a signal circuit for electronic paper still requires connecting a circuit board and a display panel by a connector or a flexible flat cable so that signals sent from an external control component are transmitted to the display panel to form a circuit control path, thereby leading to an intricate manufacturing process and high costs as a result of its structure and design. Furthermore, in practice, the keys interfere with each other and thus affect each other to the detriment of use, maintenance, and repair.

Conventional keyboards are adapted for use with various display units, such as e-ink displays, organic electroluminescent displays, and thin-film transistor liquid crystal displays, so that a single key can change symbols displayed and adapted for different languages or usage scenarios. To this end, the structure of a single key has to be modified to contain and control a display unit. The modification, however, is likely to increase the thickness and structural complexity of the key.

### SUMMARY OF THE INVENTION

In an embodiment, a three-dimensional circuit membrane comprises a thermoplastic plastic sheet and a wiring. The thermoplastic plastic sheet has a surface and a thermoformed structure outwardly protruding from the surface. The wiring is printed on the surface and extends to the thermoformed structure.

In some embodiments, thermoformed structure has a hollowed portion beside the wiring such that the thermoformed structure collapses easily.

In some embodiments, the wiring comprises a connecting segment and an ascending segment which the connecting segment adjoins, the connecting segment being disposed on a top of the thermoformed structure, and the ascending segment being disposed on a sidewall of the thermoformed structure.

In an embodiment, a key having a three-dimensional circuit membrane comprises a display unit, a connecting base, and the three-dimensional circuit membrane. The display unit has a display surface and an engaging surface. Electrodes are disposed on the engaging surface. The connecting base has a receiving surface, a snap-engaging surface, and a conduction pathway which penetrates the receiving surface and the snap-engaging surface. The receiving surface underpins the display unit. The conduction pathway is electrically connected to the electrodes. The thermoformed structure of the three-dimensional circuit membrane is disposed below the snap-engaging surface. The wiring of the three-dimensional circuit membrane is electrically connected to the conduction pathway.

In some embodiments, the key having a three-dimensional circuit membrane further comprises a rubber dome. The rubber dome is received in thermoformed structure.

In some embodiments, the key having a three-dimensional circuit membrane further comprises a support mechanism. The snap-engaging surface integrally forms a snap-engaging structure. One end of the support mechanism is engaged with the snap-engaging structure.

In an embodiment, a method of manufacturing a three-dimensional circuit membrane comprises the steps of: coating a conductive ink on a surface of a thermoplastic plastic sheet by screen printing to form a wiring; and forming an outwardly-protruding thermoformed structure at an end of the wiring by vacuum thermoforming, wherein the thermoformed structure is collapsible. The thermoformed structure is collapsible.

In some embodiments, the method of manufacturing the three-dimensional circuit membrane further comprises, before the step of coating the conductive ink, increasing surface roughness of the surface of the thermoplastic plastic sheet to increase adhesion of the conductive ink.

In some embodiments, the method of manufacturing the three-dimensional circuit membrane further comprises hollowing out the thermoformed structure beside the wiring so that the thermoformed structure collapses easily.

In an embodiment, a method of manufacturing a key, comprising the steps of: coating a conductive ink on a surface of a thermoplastic plastic sheet by screen printing to form a wiring; forming a thermoformed structure at an end of the wiring by vacuum thermoforming, wherein the thermoformed structure protrudes outward; hollowing out the thermoformed structure beside the wiring by laser cutting; disposing a connecting base on the thermoformed structure; and disposing a rubber dome below the thermoformed structure.

In conclusion, the three-dimensional circuit membrane provided by the present invention is applicable to a key switch (dome switch) with the rubber dome or a key switch (scissor-switch) with the support mechanism which is scissor-shaped or butterfly-shaped. The three-dimensional circuit membrane not only contains the rubber dome and/or circumvents the support mechanism but also provides a signal circuit disposed on or outside the rubber dome and adapted to control the display unit, so as to send the control signals to the display unit. The three-dimensional circuit membrane collapses easily when pressed but rebounds when not. When applied to the key with the display unit, the three-dimensional circuit membrane provided by the present invention can be easily put together to form the key thus required, and the finished key meets users' expectations for seeing and touching the key pleasantly. When applied to a keyboard with multiple keys, the three-dimensional circuit membrane provided by the present invention provides a control circuit of the display unit and prevents interference from taking place between the keys, thereby enhancing ease of use. A method of manufacturing the three-dimensional circuit membrane and/or a method of manufacturing the keys, provided by the present invention, are effective in processing all the keys of a keyboard simultaneously in a single process, for example, forming the thermoformed structures and the wirings of all the keys of a keyboard simultaneously, so as to simplify processes, reduce manufacturing costs, and enable mass production.

The features and advantages of the present invention are detailed hereinafter with reference to the preferred embodiments. The detailed description is intended to enable persons skilled in the art to gain insight into the technical contents disclosed herein and implement the present invention accordingly. In particular, persons skilled in the art can easily understand the objectives and advantages of the present invention by referring to the disclosure of the specification, the claims, and the accompanying drawings.

### BRIEF DESCRIPTION OF THE DRAWINGS

FIG. 1 is a perspective schematic view of a three-dimensional circuit membrane according to an embodiment of the present invention;
FIG. 2 is a perspective schematic view of a thermoformed structure of the three-dimensional circuit membrane according to an embodiment of the present invention;
FIG. 3 is a cutaway schematic view of FIG. 2;
FIG. 4 is a partial perspective exploded view of a key according to an embodiment of the present invention;
FIG. 5 is a partial perspective exploded view taken from another angle of the key of FIG. 4;
FIG. 6 is a perspective exploded view of the key of FIG. 4;
FIG. 7A is a perspective view of the key of FIG. 6 when assembled;
FIG. 7B is a cross-sectional schematic view of the key of FIG. 7A;
FIG. 8 is a schematic view of the process flow of a method of manufacturing the three-dimensional circuit membrane according to the first embodiment of the present invention;
FIG. 9 is a schematic view of the process flow of the method of manufacturing the three-dimensional circuit membrane according to the second embodiment of the present invention;
FIG. 10 is a schematic view of the process flow of the method of manufacturing the three-dimensional circuit membrane according to the third embodiment of the present invention;
FIG. 11 is a schematic view of the process flow of the method of manufacturing the three-dimensional circuit membrane according to the fourth embodiment of the present invention; and
FIG. 12 is a schematic view of the process flow of the method of manufacturing a key according to an embodiment of the present invention.

### DETAILED DESCRIPTION OF THE EMBODIMENTS

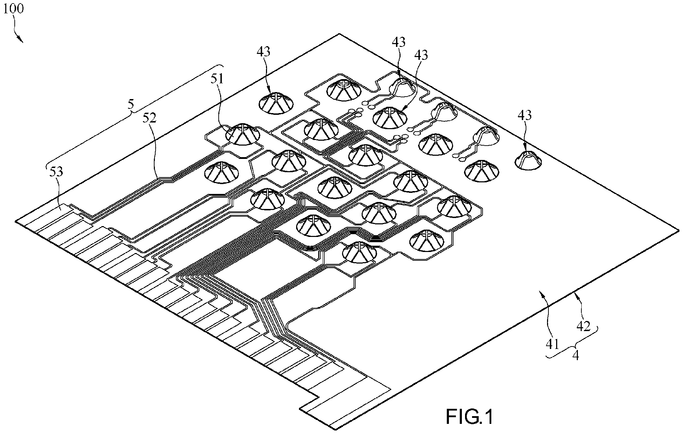

FIG. 1 is a perspective schematic view of a three-dimensional circuit membrane 100 according to an embodiment of the present invention. Referring to FIG. 1, the three-dimensional circuit membrane 100 comprises a thermoplastic plastic sheet 4 and a wiring 5. Thermoplastic plastic sheet 4 has an upper surface 41, a lower surface 42, and thermoformed structures 43 outwardly protruding from the upper surface 41. Thermoplastic plastic sheet 4 is made of polyester or any other thermoplastic plastics. The wiring 5 is printed on the upper surface 41 and extends to the thermoformed structures 43.

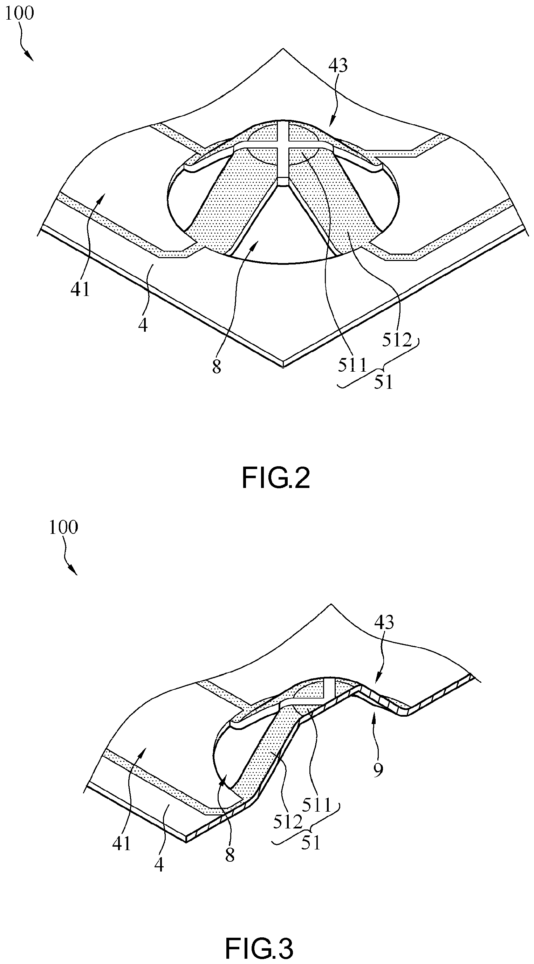

FIG. 2 is a perspective schematic view of the thermoformed structure 43 of the three-dimensional circuit membrane 100 according to an embodiment of the present invention. FIG. 3 is a cutaway schematic view of FIG. 2. Referring to FIG. 2 and FIG. 3, the thermoformed structure 43 has a hollowed portion 8 beside the wiring 5 such that the thermoformed structure 43 collapses easily. The hollowed portion 8 is formed laterally at the thermoformed structure 43 to reduce the lateral mechanical strength of the thermoformed structure 43; hence, the top of the thermoformed structure 43 moves downward easily when pressed under an external force. The thermoformed structure 43 has therein a hollow space 9 to further enhance the ease in which the thermoformed structure 43 collapses easily. In some embodiments, the wiring 5 on the thermoformed structure 43 comprises a connecting segment 511 and an ascending segment 512. The connecting segment 511 adjoins the ascending segment 512. The connecting segment 511 is disposed on the top of the thermoformed structure 43, whereas the ascending segment 512 is disposed on a sidewall of the thermoformed structure 43. The hollowed portion 8 is disposed on the sidewall of the thermoformed structure 43. After a user has pressed on the top of the thermoformed structure 43, the thermoformed structure 43 restores its original shape because of the support provided by the sidewall.

Referring to FIG. 1, in some embodiments, the wiring 5 not only comprises a pressing wiring 51 formed from the connecting segment 511 and the ascending segment 512 but also comprises at least one connecting wiring 52 and at least one contact 53. The pressing wirings 51 are disposed on the thermoformed structure 43. The connecting wirings 52 are disposed on the thermoplastic plastic sheet 4 but not in the vicinity of the thermoformed structure 43. The connecting wirings 52 correspond in position to the pressing wirings 51. The connecting wirings 52 directly couple the corresponding pressing wirings 51 to the contacts 53, respectively. The contacts 53 serve as signal input/output ports of the three-dimensional circuit membrane 100 with respect to external components (such as a circuit board). Therefore, the contacts 53 can be coupled to external circuits or connectors to form an electrical signal delivery path for external use. In some embodiments, the contacts 53 are located at an edge shared by the thermoplastic plastic sheet 4 and the contacts 53 so as to be coupled to the external circuits or connectors.

In some embodiments, the three-dimensional circuit membrane 100 is disposed in a key to provide a delivery path for control signals, such as a display signal for a key pattern or an enable signal for a key light source. If the key with the three-dimensional circuit membrane 100 is for use with a keyboard which has multiple keys, the thermoformed structures 43 formed on the three-dimensional circuit membrane 100 correspond in quantity and position to the keys of the keyboard. Therefore, a single said three-dimensional circuit membrane 100 can be in use with one or more keys or even the keyboard in its entirety, by changing the quantity and positions of the thermoformed structures 43 formed on the thermoplastic plastic sheet 4 as needed. For illustrative sake, the description below is exemplified by one key.

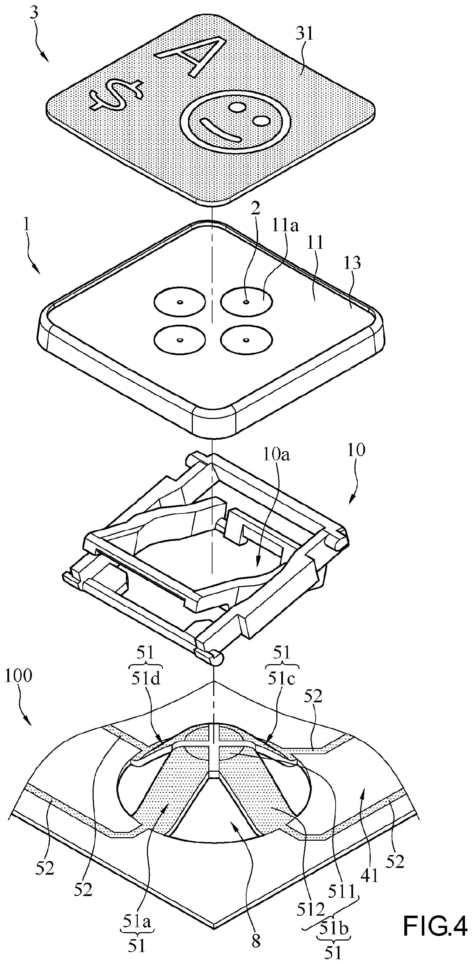

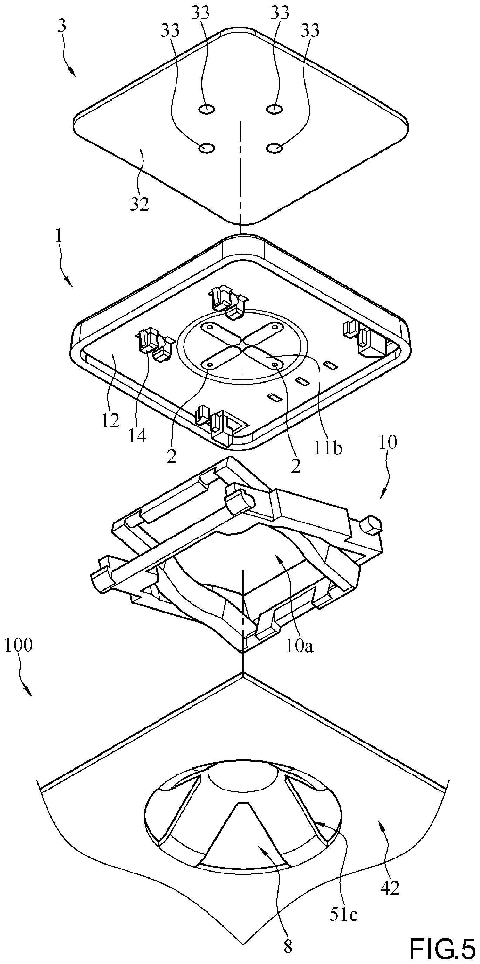

FIG. 4 is a partial perspective exploded view of a key 200 according to an embodiment of the present invention. FIG. 5 is a partial perspective exploded view taken from another angle of the key 200 of FIG. 4. Referring to FIG. 4 and FIG. 5, the key 200 comprises a display unit 3, a connecting base 1, and the three-dimensional circuit membrane 100 (inclusive of one said thermoformed structure 43 for an exemplary purpose). The display unit 3 has a display surface 31 and an engaging surface 32. The display surface 31 and the engaging surface 32 are opposite and substantially parallel. A plurality of electrodes 33 is disposed on the engaging surface 32 and electrically coupled to the display surface 31. The electrodes 33 control the display of the display surface 31. In this embodiment, the display unit 3 is an e-ink display unit with zones defined thereon to display in full black and full white, respectively. However, in a variant embodiment, the display unit 3 is any other display unit with the electrodes 33 disposed on the lower surface of the display unit. The connecting base 1 has a receiving surface 11, a snap-engaging surface 12, and a plurality of conduction pathways 2. The receiving surface 11 underpins the display unit 3. The receiving surface 11 has thereon upper contacts 11a corresponding in position to the conduction pathways 2, respectively. The snap-engaging surface 12 has thereon lower contacts 11b corresponding in position to the conduction pathways 2, respectively. The conduction pathways 2 each penetrate the receiving surface 11 and the snap-engaging surface 12. The two ends of each conduction pathway 2 are coupled to a corresponding one of the upper contacts 11a and a corresponding one of the lower contacts 11b, respectively. The upper contacts 11a correspond in quantity and position to the electrodes 33 on the display unit 3. When the display unit 3 is superimposed on the receiving surface 11 of the connecting base 1, the upper contacts 11a are aligned with and in contact with the electrodes 33, respectively, so that the electrodes 33 are not only electrically connected to the upper contacts 11a but are also electrically connected to the lower contacts 11b by the conduction pathways 2. At this point in time, if the thermoformed structure 43 of the three-dimensional circuit membrane 100 is aligned with and disposed below the snap-engaging surface 12, the pressing wirings 51 on the thermoformed structure 43 are in direct contact with the lower contacts 11b on the snap-engaging surface 12 through the connecting segments 511 so that the pressing wirings 51 of the three-dimensional circuit membrane 100 are electrically connected to the electrodes 33 by the lower contacts 11b, the conduction pathways 2, and the upper contacts 11a. Hence, external signals received by the contacts 53 are transmitted to the electrodes 33 by the connecting wirings 52, the pressing wirings 51, the lower contacts 11b, the conduction pathways 2, and the upper contacts 11a so as to control the display of the display surface 31. Therefore, the three-dimensional circuit membrane 100 provides a signal circuit for the display unit 3 so as to send the control signals to the display unit 3.

In this embodiment, the connecting base 1 is manufactured by plastic injection molding, and the receiving surface 11 of the connecting base 1 is substantially parallel to the snap-engaging surface 12 so as to reduce the total thickness of the key 200.

In an embodiment, a limiting structure 13 is disposed at the periphery of the receiving surface 11. The limiting structure 13 limits positions of an electronic paper 3 and the connecting base 1 relative to each other.

In some embodiments, the display unit 3 is a thin-paper or thin-board electronic paper. A plurality of display zones is defined on the display surface 31 of the display unit 3. A transparent keycap on the display surface 31 or the display surface 31 is blackened with a black pigment, and then the black pigment coated on the display surface 31 or the transparent keycap is hollowed out by a laser nameplate. The display surface 31 brightens, darkens, or alternates black and white, so as to change contrast, brightness or shades of pictures and symbols, such as alphabets, on the display unit 3 or the transparent keycap, thereby varying how conspicuous the hollow-out symbols are. In an embodiment, a plurality of display zones is defined on the display surface 31 of the display unit 3, and it is feasible to control whether symbols in the display zones display independently of each other, thereby displaying one symbol only or multiple symbols simultaneously.

Take three display zones as an example, the three display zones are coupled to three first electrodes, respectively, but to one second electrode jointly. Voltage changes resulting from electrically connecting the three display zones to the first electrodes and to the second electrode intermittently enable the corresponding ones of the display zones to brighten, darken, or alternate black and white, thereby determining whether to display the symbols of the display zones. Therefore, the four electrodes 33 (three first electrodes and one second electrode) are disposed on the engaging surface 32 of the display unit 3. The connecting base 1 has four upper contacts 11a, four conduction pathways 2, and four lower contacts 11b. A first end of each conduction pathway 2 is disposed on the receiving surface 11 and coupled to a corresponding one of the upper contacts 11a. The four upper contacts 11a correspond in position to the four electrodes 33, respectively. A second end of each conduction pathway 2 is disposed on the snap-engaging surface 12 and coupled to a corresponding one of the lower contacts 11b. Therefore, when the display unit 3 is superimposed on the connecting base 1, the electrodes 33 of the display unit 3 are electrically connected to the lower contacts 11b by the upper contacts 11a and the conduction pathways 2, respectively.

The pressing wirings 51 on the thermoformed structure 43 are defined as four discrete branch wirings 51a∼51d. The connecting segments 511 of the four branch wirings 51a∼51d correspond in position to the four lower contacts 11b on the snap-engaging surface 12, respectively. Therefore, when the three-dimensional circuit membrane 100 is superimposed on the connecting base 1, the lower contacts 11b on the snap-engaging surface 12 are adhered to the connecting segments 511 of the branch wirings 51a∼51d, respectively, so that the branch wirings 51a∼51d are electrically connected to the four electrodes 33 by the lower contacts 11b, the conduction pathways 2, and the upper contacts 11a.

The four branch wirings 51a∼51d are electrically connected to the contacts 53 through the connecting wirings 52 which the four branch wirings 51a∼51d are coupled to; hence, the four branch wirings 51a∼51d are electrically connected to control components outside the three-dimensional circuit membrane 100. Therefore, signals generated from the control components which the three-dimensional circuit membrane 100 is connected to can be delivered to the display unit 3 by the wiring 5, so as to control the time when the display zones on the display surface 31 brighten, darken, or alternate black and white.

Although the aforesaid embodiment is exemplified by the four electrodes 33 corresponding in position to the four branch wirings 51a∼51d, the quantity of the electrodes 33 and the quantity of the corresponding branch wirings vary with the quantity of the display zones. Therefore, the quantity of the branch wirings is subject to changes as needed. Accordingly, the present invention includes, but is not limited to, the four branch wirings 51a∼51d.

In some embodiments, as shown in FIG. 5, the branch wirings 51a-51d disposed on the top of the thermoformed structure 43 are spaced apart from each other to discern the control signals. In some embodiments, the hollowed portion 8 is disposed between the ascending segment 512 of the branch wiring 51a and the ascending segment 512 of the branch wiring 51b, between the ascending segment 512 of the branch wiring 51b and the ascending segment 512 of the branch wiring 51c, between the ascending segment 512 of the branch wiring 51c and the ascending segment 512 of the branch wiring 51d, as well as between the ascending segment 512 of the branch wiring 51a and the ascending segment 512 of the branch wiring 51d to reduce the mechanical strength of the sidewall, thereby allowing the thermoformed structure 43 to collapse easily.

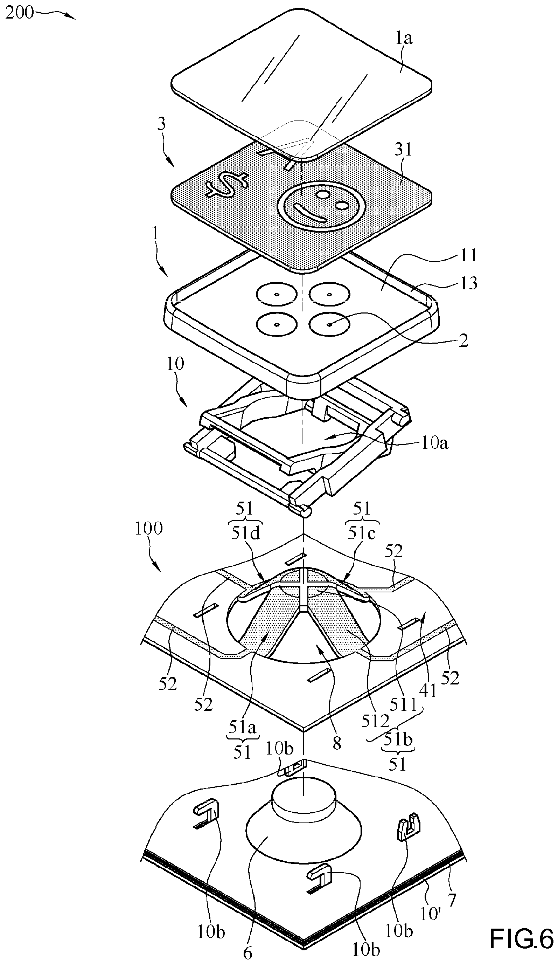

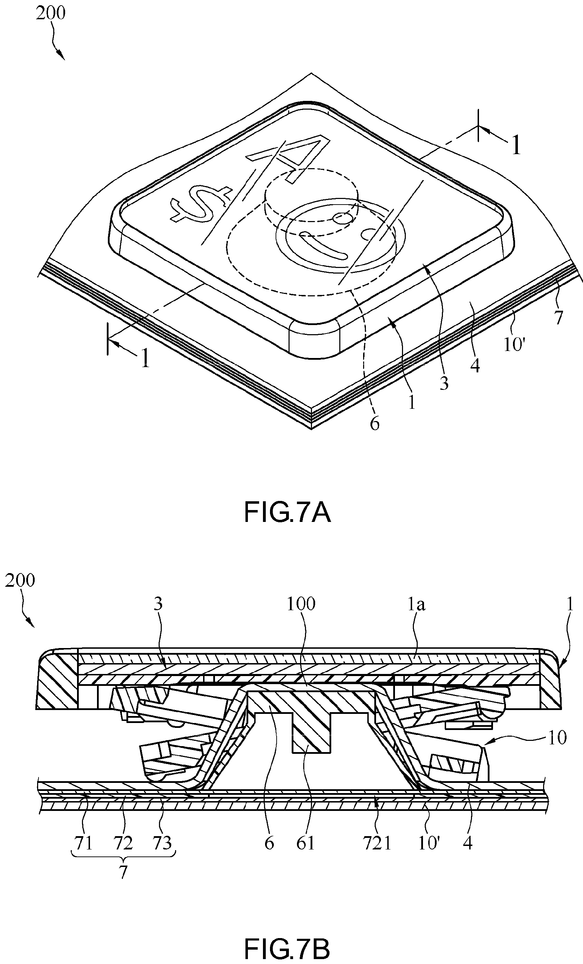

FIG. 6 is a perspective exploded view of the key 200 with a three-dimensional circuit membrane according to an embodiment of the present invention. FIG. 7A is a perspective view of the key 200 with the three-dimensional circuit membrane according to an embodiment of the present invention when assembled. FIG. 7B is a cross-sectional schematic view of the key taken along line 1-1 of FIG. 7A. Referring to FIG. 6 through FIG. 7B, the key 200 further comprises a keycap 1a and a rubber dome 6. The keycap 1a is a plastic element penetrable by light to protect the display unit 3. The rubber dome 6 is disposed on a signal delivery component 7. The rubber dome 6 has therein a bump 61. The signal delivery component 7 comprises an upper circuit membrane 71, a partition membrane 72 and a lower circuit membrane 73. The partition membrane 72 has an opening 721 corresponding in position to the bump 61. When the user presses the key 200, the bump 61 of the rubber dome 6 moves downward to press against the upper circuit membrane 71 so that the upper circuit membrane 71 sags to come into physical and electrical contact with the lower circuit membrane 73 through the opening 721, thereby sending signals to external components. The rubber dome 6 is received in the thermoformed structure 43 to ensure that the key 200 returns to a pre-press height easily while being pressed. In some embodiments, as shown in FIG. 3, the thermoformed structure 43 has therein a hollow space 9, and the rubber dome 6 is disposed in the hollow space 9.

In an embodiment, the snap-engaging surface 12 further comprises four snap-engaging structures 14. The snap-engaging structures 14 snap-engage with a scissor-shaped or butterfly-shaped support mechanism 10 to form a restorable key switch (scissor-switch). The support mechanism 10 has a central depletion region 10a. The thermoformed structure 43 is superimposed on the rubber dome 6 and penetratingly disposed within the central depletion region 10a. The upper end of the support mechanism 10 snap-engages with the snap-engaging structures 14. A fixing base 10' is disposed below the signal delivery component 7. The fixing base 10' is usually a sheet metal element. In this embodiment, the fixing base 10' comprises at least one positioning stand 10b which penetrates the signal delivery component 7 and the three-dimensional circuit membrane 100 to snap-engage with the lower end of the support mechanism 10. Hence, when the key 200 is pressed, the support mechanism 10 enables the key 200 to return to a pre-press height easily. The snap-engaging structures 14 are integrally formed on the snap-engaging surface 12 by plastic injection molding.

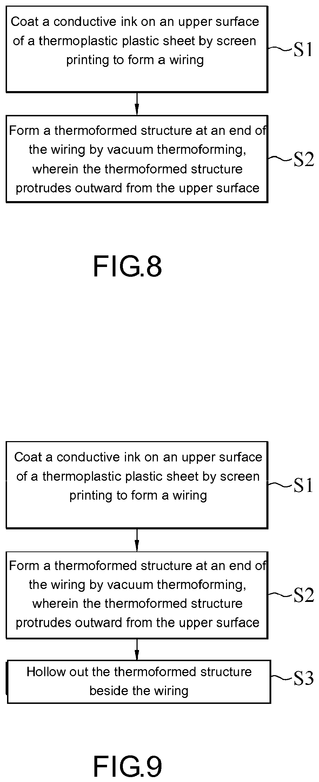

FIG. 8 is a schematic view of the process flow of the method of manufacturing the three-dimensional circuit membrane 100 according to the first embodiment of the present invention. Referring to FIG. 8, the method involves coating a conductive ink on the upper surface 41 of the thermoplastic plastic sheet 4 by screen printing to form the wiring 5 (step S1). The method further involves forming the thermoformed structure 43 at an end of the wiring 5 by vacuum thermoforming, wherein the thermoformed structure 43 protrudes outward from the upper surface 41 (step S2). The thermoformed structure 43 has therein a hollow core; hence, when pressed under an external force, the thermoformed structure 43 collapses. In an embodiment of step S2, four discrete branch wirings 51' are disposed on the top of the thermoformed structure 43.

In some embodiments, before step S1, it is feasible to increase surface roughness of the upper surface 41 of the thermoplastic plastic sheet 4 so as to increase adhesion of the conductive ink. The way of increasing the surface roughness entails, for example, rubbing the upper surface 41 of the thermoplastic plastic sheet 4 with sandpaper. Alternatively, the way of increasing the surface roughness entails making non-uniform tiny dents on the thermoplastic plastic sheet 4 by a laser technique to increase the surface roughness of the upper surface 41 of the thermoplastic plastic sheet 4. However, the present invention is not restrictive of the way to increase the surface roughness of the upper surface of the thermoplastic plastic sheet 4. FIG. 9 is a schematic view of the process flow of the method of manufacturing the three-dimensional circuit membrane 100 according to the second embodiment of the present invention. Referring to FIG. 9, step S2 is followed by a step (step S3) of hollowing out the thermoformed structure 43 beside the wiring 5 so that the thermoformed structure 43 collapses easily. In an embodiment of step S3, the thermoplastic plastic sheet 4 between the branch wirings 51' on the sidewall of the thermoformed structure 43 is removed to form the hollowed portion 8. Due to the removal of the thermoplastic plastic sheet 4 between the branch wirings 51', the hollow-cored thermoformed structure 43 collapses easily when pressed.

In some embodiments of step S3, the step of hollowing out the thermoformed structure 43 is effectuated by laser cutting, but the present invention is not limited thereto. In a variant embodiment, the thermoformed structure 43 is hollowed out by any other cutting techniques, such as knife-cutting and line-cutting.

The present invention is not restrictive of the order in which step S2 and step S3 occur. In some embodiments, step S2 either precedes or follows step S3; hence, for example, upon completion of step S1, the step S3 of hollowing out the thermoformed structure 43 beside the wiring 5 is performed and then followed by the step S2 of forming the thermoformed structure 43 at an end of the wiring 5 by vacuum thermoforming, wherein the thermoformed structure 43 protrudes outward from the upper surface 41. Likewise, the three-dimensional circuit membrane 100 is manufactured.

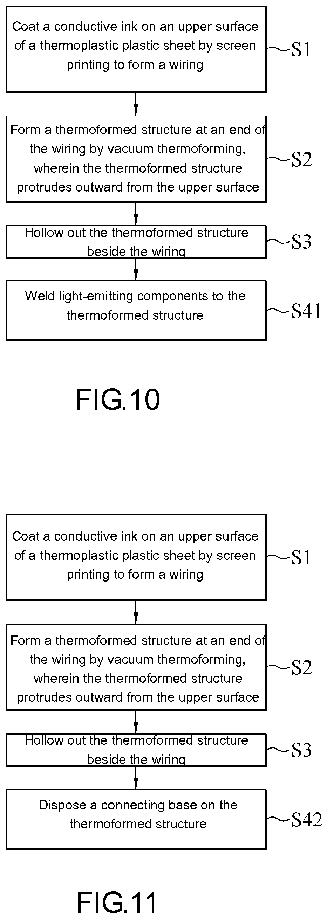

In some embodiments, the three-dimensional circuit membrane 100 is applicable to keyboards capable of light emission and display. FIG. 10 is a schematic view of the process flow of the method of manufacturing the three-dimensional circuit membrane 100 according to the third embodiment of the present invention. Referring to FIG. 10, step S3 is followed by a step (step S41) of welding light-emitting components to the thermoformed structure 43 to achieve the following: electrically connecting the light-emitting components to the wiring 5; receiving a driving signal by the wiring 5; controlling the light-emitting components to emit light, turn on, and turn off; and enabling the user to enjoy seeing and touching keyboards while using them. The light-emitting components are, for example, light-emitting diodes (LED).

FIG. 11 is a schematic view of the process flow of the method of manufacturing the three-dimensional circuit membrane 100 according to the fourth embodiment of the present invention. In some embodiments, as shown in FIG. 11, step S3 is followed by a step (step S42) of disposing the connecting base 1 on the thermoformed structure 43 shown in FIG. 4 through FIG. 6.

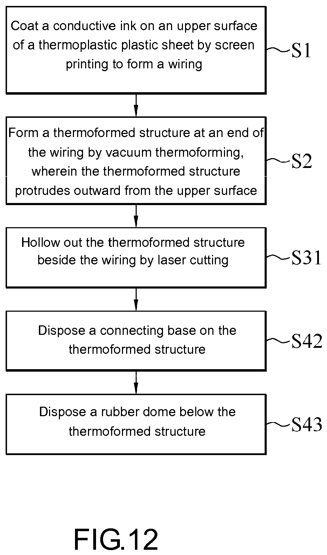

FIG. 12 is a schematic view of the process flow of the method of manufacturing the key 200 according to an embodiment of the present invention. In some embodiments, as shown in FIG. 12, the method of manufacturing the three-dimensional circuit membrane 100 is carried out in step S1and step S2, and step S2 is followed by step S31 which involves hollowing out the thermoformed structure beside the wiring by laser cutting. Step S42 or step S3 is followed by a step (step S43) of disposing the rubber dome 6 below the thermoformed structure 43 shown in FIG. 6 and FIG. 7. Therefore, the rubber dome 6 is received in the thermoformed structure 43 to provide a restoring force for the key 200 and thus ensure that the key 200 returns to a pre-press height easily while being pressed.

In an embodiment, after step S3 but before step S42, it is feasible to perform two other steps as follows: snap-engaging the upper end of the scissor-shaped or butterfly-shaped support mechanism 10 with the upper end of the snap-engaging structures 14; and penetratingly dispose the thermoformed structure 43 within the central depletion region 10a of the support mechanism 10.

In an embodiment of step S43, the lower end of the support mechanism 10 is fixed to the positioning stand 10b of the fixing base 10', whereas the positioning stand 10b penetrates the signal delivery component 7 and the three-dimensional circuit membrane 100 to snap-engage with the lower end of the support mechanism 10 and confine the rubber dome 6 between the thermoformed structure 43 and the signal delivery component 7.

In conclusion, the three-dimensional circuit membrane 100 provided by the present invention is applicable to a key switch (dome switch) with the rubber dome 6 or a key switch (scissor-switch) with the support mechanism 10 which is scissor-shaped or butterfly-shaped. The three-dimensional circuit membrane 100 not only contains the rubber dome and/or circumvents the support mechanism but also provides a signal circuit disposed on or outside the rubber dome 6 and adapted to control the display unit 3, so as to send the control signals to the display unit 3. The three-dimensional circuit membrane 100 collapses easily when pressed but rebounds when not. When applied to the key 200 with the display unit 3, the three-dimensional circuit membrane 100 provided by the present invention can be easily put together to form the key 200 thus required, and the finished key 200 meets users' expectations for seeing and touching the key 200 pleasantly. When applied to a keyboard with multiple keys 200, the three-dimensional circuit membrane 100 provided by the present invention provides a control circuit of the display unit 3 and prevents interference from taking place between the keys 200, thereby enhancing ease of use. A method of manufacturing the three-dimensional circuit membrane and/or a method of manufacturing the keys 200, provided by the present invention, are effective in processing all the keys of a keyboard simultaneously in a single process, for example, forming the thermoformed structures 43 and the wirings of all the keys 200 of a keyboard simultaneously, so as to simplify processes, reduce manufacturing costs, and enable mass production.

Although the present invention is disclosed above by preferred embodiments, the preferred embodiments are not restrictive of the present invention. Slight changes and modifications made by persons skilled in the art to the preferred embodiments without departing from the spirit of the present invention must be deemed falling within the scope of the present invention. Accordingly, the legal protection for the present invention should be defined by the appended claims.

### LISTING OF REFERENCE NUMERALS

1 connecting base
10 scissor-shaped or butterfly-shaped support mechanism
10' fixing base
10a central depletion region
10b positioning stand
2 conduction pathway
3 display unit
31 display surface
32 engaging surface
33 electrode
4 thermoplastic plastic sheet
41 upper surface
42 lower surface
43 thermoformed structure
5 wiring
51 pressing wiring
51' discrete branch wiring
51a, 51b, 51c, 51d discrete branch wiring
511 connecting segment
512 ascending segment
52 connecting wiring
53 contact
6 rubber dome
61 bump
7 signal delivery component
71 upper circuit membrane
72 partition membrane
721 opening
73 lower circuit membrane
8 hollowed portion
9 hollow space of the thermoformed structure 43
11 receiving surface
11a upper contact
11b lower contact
12 snap-engaging surface
13 limiting structure
14 snap-engaging structure
100 three-dimensional circuit membrane
200 key

## Claims

1. A three-dimensional circuit membrane (100), comprising:
a thermoplastic plastic sheet (4) having a surface (41) and a thermoformed structure (43) outwardly protruding from the surface (41); and
a wiring (5) printed on the surface (41) and extending to the thermoformed structure (43).

2. The three-dimensional circuit membrane (100) of claim 1, wherein the thermoformed structure (43) has a hollowed portion (8) beside the wiring (5) such that the thermoformed structure (43) collapses easily.

3. The three-dimensional circuit membrane (100) of claim 1, wherein the wiring (5) comprises a connecting segment (511) and an ascending segment (512) which the connecting segment (511) adjoins, the connecting segment (511) being disposed on a top of the thermoformed structure (43), and the ascending segment (512) being disposed on a sidewall of the thermoformed structure (43).

4. A key (200) having a three-dimensional circuit membrane (100), comprising:
a display unit (3) having a display surface (31) and an engaging surface (32), wherein an electrode (33) is disposed on the engaging surface (32);
a connecting base (1) having a receiving surface (11), a snap-engaging surface (12), and a conduction pathway (2) penetrating the receiving surface (11) and the snap-engaging surface (12), wherein the receiving surface (11) underpins the display unit (3), and the conduction pathway (2) is electrically connected to the electrode (33); and
the three-dimensional circuit membrane (100) of any one of claims 1-3, with the thermoformed structure (43) disposed below the snap-engaging surface (12), and the wiring (5) electrically connected to the conduction pathway (2).

5. The key (200) of claim 4, further comprising a rubber dome (6) received in the thermoformed structure (43).

6. The key (200) of claim 4, further comprising a support mechanism (10) with an end engaged with a snap-engaging structure (14) integrally formed on the snap-engaging surface (12).

7. A method of manufacturing a three-dimensional circuit membrane (100), comprising the steps of:
coating a conductive ink on a surface (41) of a thermoplastic plastic sheet (4) by screen printing to form a wiring (5); and
forming an outwardly-protruding thermoformed structure (43) at an end of the wiring (5) by vacuum thermoforming, wherein the thermoformed structure (43) is collapsible.

8. The method of manufacturing the three-dimensional circuit membrane (100) according to claim 7, further comprising, before the step of coating the conductive ink, increasing surface roughness of the surface (41) to increase adhesion of the conductive ink.

9. The method of manufacturing the three-dimensional circuit membrane (100) according to claim 7, further comprising hollowing out the thermoformed structure (43) beside the wiring (5) so that the thermoformed structure (43) collapses easily.

10. A method of manufacturing a key (200), comprising the steps of:
coating a conductive ink on a surface (41) of a thermoplastic plastic sheet (4) by screen printing to form a wiring (5);
forming a thermoformed structure (43) at an end of the wiring (5) by vacuum thermoforming, wherein the thermoformed structure (43) protrudes outward;
hollowing out the thermoformed structure (43) beside the wiring (5) by laser cutting;
disposing a connecting base (1) on the thermoformed structure (43); and
disposing a rubber dome (6) below the thermoformed structure (43).
